(19) Europäisches Patentamt / European Patent Office / Office européen des brevets

(11) **EP 3 815 265 B1**

(12) **EUROPEAN PATENT SPECIFICATION**

(45) Date of publication and mention of the grant of the patent:
**03.04.2024 Bulletin 2024/14**

(21) Application number: **19825563.0**

(22) Date of filing: **26.06.2019**

(51) International Patent Classification (IPC):
$H04B\ 10/079^{(2013.01)}$    $H02J\ 50/60^{(2016.01)}$
$H04B\ 17/21^{(2015.01)}$    $H02J\ 50/12^{(2016.01)}$
$H02J\ 50/80^{(2016.01)}$    $H04B\ 5/00^{(2024.01)}$
$H04B\ 17/318^{(2015.01)}$

(52) Cooperative Patent Classification (CPC):
**H04B 17/318; H02J 50/12; H02J 50/60; H02J 50/80; H04B 5/24; H04B 5/79;** H04B 17/27

(86) International application number:
**PCT/IL2019/050711**

(87) International publication number:
**WO 2020/003314 (02.01.2020 Gazette 2020/01)**

(54) **ENHANCED METHOD FOR FOREIGN OBJECTS DETECTION**

VERBESSERTES VERFAHREN ZUR FREMDKÖRPERDETEKTION

PROCÉDÉ AMÉLIORÉ DE DÉTECTION D'OBJETS ÉTRANGERS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2018 US 201862690356 P**

(43) Date of publication of application:
**05.05.2021 Bulletin 2021/18**

(73) Proprietor: **Powermat Technologies Ltd.**
**4970602 Kiryat Arie, Petach Tikva (IL)**

(72) Inventors:
- **SHERMAN, Itay**
  **4501560 Hod HaSharon (IL)**
- **MACH, Elieser**
  **90938 Rosh Zorin (IL)**

(74) Representative: **Maiwald GmbH**
**Engineering**
**Elisenhof**
**Elisenstrasse 3**
**80335 München (DE)**

(56) References cited:
EP-A1- 1 278 313    WO-A1-2018/038531
US-A1- 2012 112 532    US-A1- 2012 235 636
US-A1- 2016 020 642    US-A1- 2016 238 731
US-A1- 2017 141 622    US-B2- 9 825 486

- **Vladimir Muratov: "Methods for Foreign Object Detection in Inductive Wireless Charging", Qi Developer Forum, 16 November 2017 (2017-11-16), XP055551071, Retrieved from the Internet: URL:https://www.wirelesspowerconsortium.com/data/downloadables/1/9/0/9/wpc1704-vladimir-muratov-methods-for-foreign-object-detection.pdf [retrieved on 2019-02-04]**
- **TAKASHI KOMARU: "Compact and Tunable Transmitter and Receiver for Magnetic Resonance Power Transmission to Mobile Objects", Denso technical review, vol. 20, 31 December 2015 (2015-12-31), pages 64-75, XP055670186,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosed subject matter relates to wireless power charging systems. More particularly, the present disclosed subject matter relates enhanced methods for detecting foreign objects.

BACKGROUND

Growing demand for wireless power charging systems led to dramatic deployments increase, in a wide variety of venues, and raises the need for increasing the effective charging distance between a transmitter and a receiver. Typically, the systems are installed on top of surfaces, such as tables, bars, or the like that are accessible to users, thus require decorative appearance and hazards free installation. Most of the deployed systems are using the wireless power consortium (WPC) Qi technology, which is constantly pushing for increasing the power to meet the need of power-hungry chargeable device, such as smartphones laptops and the like.

One of the safety concerns associated with wireless power charging technology has to do with presence of ferromagnetic material (foreign objects) that may interfere between a wireless power transmitter and wireless power receiver of such systems. These foreign objects, situated in proximity to the charging system, may absorb energy from a magnetic field created by the transmitter and cause overheating, fire, especially in high power charging.

Some commercially available charging systems employ a foreign object detection mechanism based on measurement of the system Q-factor by transmitter, and comparing it to reported Q-factor by the receiver. This mechanism requires that each power receiver (PRX) shall store a Q-factor value, that was measured during production at best coupling with a reference transmitter. According to this mechanism the PRX communicate its stored Q-factor to the PTX each time it is placed on a PTX while the PTX determines Q-factor with the PRX placed on it. A difference, above a threshold value, between the stored Q-factor and the determined Q-factor is used by commercially available systems as an indication of a foreign object presence.

It should be noted that, accumulated testing of the commercially available mechanism exhibit inaccuracy higher than 25% in foreign object detection. It is the objective of the present disclosure to provide an accurate method for foreign object detection.

Vladimir Muratov: "Methods for Foreign Object Detection is Inductive Wireless Charging" XP0555551071 describes measuring a Q-factor as a decay rate of TX coil self resonance.

US 9 825 486 B2 describes a method for detecting foreign objects in a wireless charging system.

WO 2018/038531 A1 describes a method for detecting foreign material.

BRIEF SUMMARY

The present invention is defined by the subject-matter of the independent claims.

According to a first aspect of the present disclosed subject matter a method of determining a calibrated signal strength factor used for an enhanced method of foreign object detection, by a receiver positioned on top of a transmitter, the method of determining a calibrated signal strength factor comprising: measuring a first signal strength resulting from a digital ping initiated by the transmitter at a first position, wherein the first position is a best coupling position; determining a first Q-factor for the first position, wherein the first Q-factor is a reported Q-factor; measuring a second signal strength resulting from another digital ping initiated by the transmitter at a second position; determining a second Q-factor for the second position; determining a calibrated signal strength factor based on, the first signal strength the second signal strength the first Q-factor and the second Q-factor.

BRIEF DESCRIPTION OF THE DRAWINGS

Some embodiments of the disclosed subject matter described, by way of example only, with reference to the accompanying drawings. With specific reference now to the drawings in determining a normalized Q-factor by utilizing the calibrated signal strength for normalizing the system Q-factor; and performing foreign object detection by comparing the system Q-factor to the normalized Q-factor, wherein at least one foreign object is present if the system Q-factor is greater than the normalized Q-factor otherwise no foreign object is present.

According to yet another aspect of the present disclosed subject matter an enhanced method of foreign object detection, by a wireless power system having the receiver positioned on top of a transmitter, the method comprising: measuring, by the receiver, a signal strength resulting from a digital ping initiated by the transmitter; determining, by the receiver, a calibrated signal strength value by normalizing the signal strength with calibrated signal strength factor; and communicating values of the calibrated signal strength and the reported Q-factor to the transmitter, wherein the transmitter performs foreign object detection based the values. communicating values of the calibrated signal strength and the reported Q-factor to the transmitter; determining, by the transmitter, a system Q-factor based on a measured decay time; determining, by the transmitter, a normalized Q-factor by utilizing the calibrated signal strength for normalizing the system Q-factor; and performing, by the transmitter, a foreign object detection by comparing the system Q-factor to the normalized Q-factor, wherein at least one foreign object is present if the system Q-factor is greater than the normalized Q-factor otherwise no foreign object is present.

According to yet another aspect of the present disclosed subject matter an enhanced method of foreign object detection, by a receiver positioned on top of a transmitter, the method comprising: determining a reported Q-factor at best coupling position with the transmitter; calculating a time-minimum indicating a longest time period that the receiver can sustain a power pause by the transmitter without interrupting its operation, wherein the calculating the time-minimum is based on parameters comprising a time-constant and a minimal operation voltage of a rectifier of the receiver; and communicating values of the reported Q-factor the time-minimum and/or the parameters to the transmitter, wherein the transmitter performs foreign object detection based the values.

According to yet another aspect of the present disclosed subject matter an enhanced method of foreign object detection, by a transmitter positioned under a receiver, the method comprising: obtaining a time-minimum value a reported Q-factor value and/or parameters values from the receiver; determining a timeslot based on either the time-minimum value or a calculation of a time-minimum based on parameters values; pausing power output to the receiver for a duration equal to a timeslot; performing a repetitive voltage or current measurements during the timeslot for determining a decay time of the transmitter, wherein the measurements starts shortly after a beginning of the timeslot; calculating a system Q-factor based on the repetitive measurements; and performing foreign object detection by comparing the system Q-factor to the reported Q-factor, wherein at least one foreign object is present if the reported Q-factor is greater than the system Q-factor otherwise no foreign object is present.

According to yet another aspect of the present disclosed subject matter an enhanced method of foreign object detection, by a wireless power system having a receiver positioned on top of a transmitter, the method comprising: determining, by the receiver, a reported Q-factor at best coupling position with the transmitter; calculating, by the receiver, a time-minimum indicating a longest time period that the receiver can sustain a power pause by the transmitter without interrupting its operation, wherein the calculating the time-minimum is based on parameters comprising a time-constant and a minimal operation voltage of a rectifier of the receiver; and communicating values of the reported Q-factor the time-minimum and/or the parameters to the transmitter; determining, by the transmitter, a timeslot based on either the time-minimum value or a calculation of a time-minimum based on parameters values; pausing, by the transmitter, power output to the receiver for a duration equal to a timeslot; performing, by the transmitter, a repetitive voltage or current measurements during the timeslot for determining a decay time of the transmitter, wherein the measurements starts shortly after a beginning of the timeslot; calculating a system Q-factor based on the repetitive decay-time measurements; and performing, by the transmitter, foreign object detection by comparing the system Q-factor to the reported Q-factor, wherein at least one foreign object is present if the reported Q-factor is greater than the system Q-factor otherwise no foreign object is present.

BRIEF DESCRIPTION OF THE DRAWINGS

Some embodiments of the disclosed subject matter described, by way of example only, with reference to the accompanying drawings. With specific reference now to the drawings in detail, it is stressed that the particulars shown are by way of example and for purposes of illustrative discussion of the preferred embodiments of the present disclosed subject matter only, and are presented in the cause of providing what is believed to be the most useful and readily understood description of the principles and conceptual aspects of the disclosed subject matter. In this regard, no attempt is made to show structural details of the disclosed subject matter in more detail than is necessary for a fundamental understanding of the disclosed subject matter, the description taken with the drawings making apparent to those skilled in the art how the several forms of the disclosed subject matter may be embodied in practice.
In the drawings:

Fig. 1 shows a block diagram of a system for wireless power charging, in accordance with some exemplary embodiments of the disclosed subject matter;

Fig. 2 shows a flowchart diagram of a method for foreign object detection, in accordance with some exemplary embodiments of the disclosed subject matter; and

Fig. 3 shows a flowchart diagram of another method for foreign object detection, in accordance with some exemplary embodiments of the disclosed subject matter.

## DETAILED DESCRIPTION

Before explaining at least one embodiment of the disclosed subject matter in detail, it is to be understood that the disclosed subject matter is not limited in its application to the details of construction and the arrangement of the components set forth in the following description or illustrated in the drawings. The disclosed subject matter is capable of other embodiments or of being practiced or carried out in various ways. Also, it is to be understood that the phraseology and terminology employed herein is for the purpose of description and should not be regarded as limiting. The drawings are generally not to scale. For clarity, non-essential elements were omitted from some of the drawings.

The terms "comprises", "comprising", "includes", "including", and "having" together with their conjugates mean "including but not limited to". The term "consisting of" has the same meaning as "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this disclosed subject matter may be presented in a range format. It should be understood that the description in range format is merely for convenience and brevity and should not be construed as an inflexible limitation on the scope of the disclosed subject matter. Accordingly, the description of a range should be considered to have specifically disclosed all the possible sub-ranges as well as individual numerical values within that range.

It is appreciated that certain features of the disclosed subject matter, which are, for clarity, described in the context of separate embodiments, may also be provided in combination in a single embodiment. Conversely, various features of the disclosed subject matter, which are, for brevity, described in the context of a single embodiment, may also be provided separately or in any suitable sub-combination or as suitable in any other described embodiment of the disclosed subject matter. Certain features described in the context of various embodiments are not to be considered essential features of those embodiments, unless the embodiment is inoperative without those elements.

One technical problem dealt with by the disclosed subject matter is presence of unwanted metal objects (foreign objects) that can cause efficiency loss and possible safety hazards by absorbing portions of the electromagnetic field. The possible safety hazards become sever in view of the ongoing trend of increasing in the power of the wireless charging systems in the market. Typically, metal objects, such as coins, paper clips or any ferromagnetic objects attached to or situated near either a chargeable devices (loads), such as a cellphone case, a laptop; or the transmitter may impact the magnetic field.

It should be noted that, a Q-factor of a transmitter (Tx), $\left[ Q = \frac{\omega L}{R} \right]$, in a presence of a specific receiver (Rx) is not fixed and may vary according to a vertical distance [Z-gap], between the Rx and the Tx surface. This variation is caused mainly due to changes in reflected resistance, more than changes of inductance and or frequency. When a typical receiver (i.e. a receiver embedded in devices having "friendly metal") is close to the Tx, the friendly metal reflects high resistance to the Tx, whereas when the device is further away from the Tx the reflected resistance is reduced significantly. This effect is less evident with reference receivers since they generally don't include the "friendly metal".

The term device refers, in the present disclosure to a device, such as a smartphone, a phone, a tablet, a laptop computer, or the like that can be charged by a wireless power system of the present invention. Also, the term "friendly metal" refers, in the present disclosure to components that are integral part of the construction of the device, in which the receiver is embedded to, this "friendly metals" have ferromagnetic properties that interact with the magnetic field and consume part of the energy.

In commercially available systems the receiver measures a strength of a signal resulting from a digital ping sent by the transmitter (Tx) and sends a value representing the signal strength back to the Tx each time it's placed on a Tx. Accumulated testing indicate that the signal strength is not critically affected by the presence of small foreign objects, however the signal strength is strongly affected by the Z-gap, and as such could be indicative of the Z-gap, i.e. distance between the Rx and the Tx surface, even if foreign objects are present. However, in lack of clear and common calibrated method of the signal strength, the utilization of the signal strength for the purposes measuring the Z-gap is limited.

In commercially available wireless power systems, the Tx receives from the Rx its stored Q-factor prior to establishing a power contract. Then the Tx determine its own Q, i.e. system Q-factor, based on measurements of its own decay time $(\tau)$, $\left[ \tau = \frac{2Q}{\omega} \right]$, and then compare it with the Rx reported Q-factor in order to determine if foreign object is present.

Another technical problem dealt with by the disclosed subject matter is that the Rx reported Q-factor doesn't count for the Z-gap, which in practical application can be different than a zero gap between the Rx and the reference transmitter of laboratory conditions. Accumulated testing of an Rx situated above a typical Tx at a verity of Z-gaps, e.g. 0 to 5 millimeters, with and without foreign object, exhibits determined system Q-factor errors that vary between 20% to 40%, depending on the Z-gap. This, commercially available, method causes ambiguous scenarios in which it's not clear if a foreign object present or not, which is part of the technical problem dealt with by the present disclosure. One example of such possible ambiguity is that an Rx that have good coupling can yield similar system Q-factor as a Rx that have high z-gap and small foreign object.

It should also be noted that, based on the accumulated testing, commercially available methods using frequency based foreign object detection similarly cause ambiguous scenarios. For example, an Rx situated above a typical Tx at Z-gaps = 5 millimeters without foreign object have higher decay frequency than the same Rx and Tx at Z-gaps = 1.2 millimeters with foreign object. Therefore, decay frequency measurement alone is insufficient for foreign object detection.

It will also be noted that, commercially available methods using measured decay time (or derived Q-factor) is also not distinctive enough. For example, the accumulated testing shows that measured Q-factor for Tx and Rx at Z-gaps = 5 millimeters with foreign object, is higher than the calculated Q-factor for Tx and Rx at Z-gaps = 0 without foreign object.

One technical solution is providing an accurate foreign object mechanism capable of overcoming the shortcoming of the, commercially available, mechanisms depicted above.

It will be reminded that, a signal strength that can be measured by the Rx is mostly dependent on the Z-gap, i.e. between the Rx and the Tx surface, yet slightly affected by foreign object such as a coin. It will also be reminded that, the reference Q-factor reported by Rx doesn't reflect possible changes in the Z-gap, since in most cases the reference Q-factor is measured at Z-gap=0, thus the reported value is lower than the worst-case Q-factor.

In some exemplary embodiments of the disclosed subject matter, the Rx shall be configured for performing a calibration process for the signal strength measurements based on calibration information obtained and stored on factory or production line of the receiver. Furthermore, the Rx shall also communicate a value of the calibrated signal strength together with the reference Q-factor to the Tx to allow for adjusting the foreign object detection mechanism for specific Z-gap setups.

One technical effect of utilizing the disclosed subject matter is utilizing calibrated signal strength, reported value, for normalizing the reported Q-factor to correlate the signal strength with a measured Q-factor for different Z-gaps. Additionally, or alternatively, the transmitter shall utilize the value of the calibrated signal strength to normalize the reported Q-factor and then conduct a foreign object detection process.

Another technical solution is an enhanced method for determining the system Q-factor, which is based on decay-time measurement by the transmitter. In some exemplary embodiments, the transmitter can be configured to performe the measurement process also during operation (charging) without interrupting the receiver operation. The enhanced method of the present disclosure is configured to primarily neutralize the influence of the receiver from the decay time measurement of the transmitter.

The technical effect of utilizing the enhanced method, for determining the system Q-factor, improves the accuracy of the determined system Q-factor and thereby advances the foreign object detection.

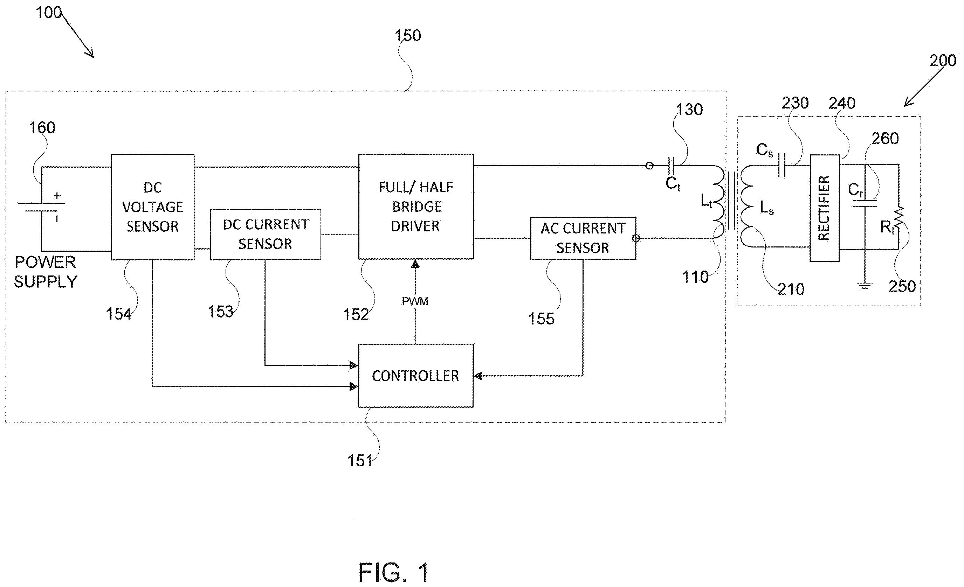

Referring now to Fig. 1 showing a block diagram of system for wireless power charging, in accordance with some exemplary embodiments of the disclosed subject matter. The system for wireless power charging comprises a transmitter (Tx) 100 and a receiver (Rx) 200.

In some exemplary embodiments, the system can be adapted to utilize Tx 100 for charging a user's chargeable device (load) 20, either via an inductive power adapter that utilize Rx 200 or directly to load 20 having an embedded Rx 200. The Rx 200 can comprise at least one secondary coil (Ls) 210 and capacitor (Cs) 230, forming together an LC resonance circuit.

In some exemplary embodiments, Tx 100 can comprise a transmitter electronics (Tx elect) 150, at least one primary coil (Lt) 110, and at least one capacitor Ct 130, configured for inducing current in the coil of Rx 200. The Tx-elect 150 comprises of a controller 151; a full or half bridge driver 152, a DC current sensor 153, a DC voltage sensor 154, and an AC current sensor 155.

Controller 151 can be a central processing unit (CPU), a microprocessor, an electronic circuit, an integrated circuit (IC), or the like. Additionally, or alternatively, controller 151 can be implemented as firmware written for or ported to a specific processor such as digital signal processor (DSP) or microcontrollers, or can be implemented as hardware or configurable hardware such as field programmable gate array (FPGA) or application specific integrated circuit (ASIC). Controller 151 can be utilized to perform computations required by Tx 110 or any of its subcomponents.

In some exemplary embodiments of the disclosed subject matter, the controller 151 is configured to determine the following parameters:

a. DC voltage across PS 160 by acquiring and measuring an outcome of DC voltage sensor 154.
b. DC current supplied by PS 160 by acquiring and measuring an outcome of DC current sensor 153.
c. AC current supplied to Lt 110 by acquiring and measuring an outcome of AC current sensor 155. Alternatively, output AC current can be determined by sensing instantaneous current flowing to the driver from the power supply with DC current sensor 153.

It should be noted that determining parameters for AC current can comprise peak current, average of absolute current, RMS current, amplitude of first harmonic, and any combination thereof, or the like

In some exemplary embodiments, controller 151 comprises a semiconductor memory component (not shown). The memory may be persistent or volatile memory, such as for example, a flash memory, a random-access memory (RAM), a programable read only memory (PROM), a re-programmable memory (FLASH), and any combination thereof, or the like.

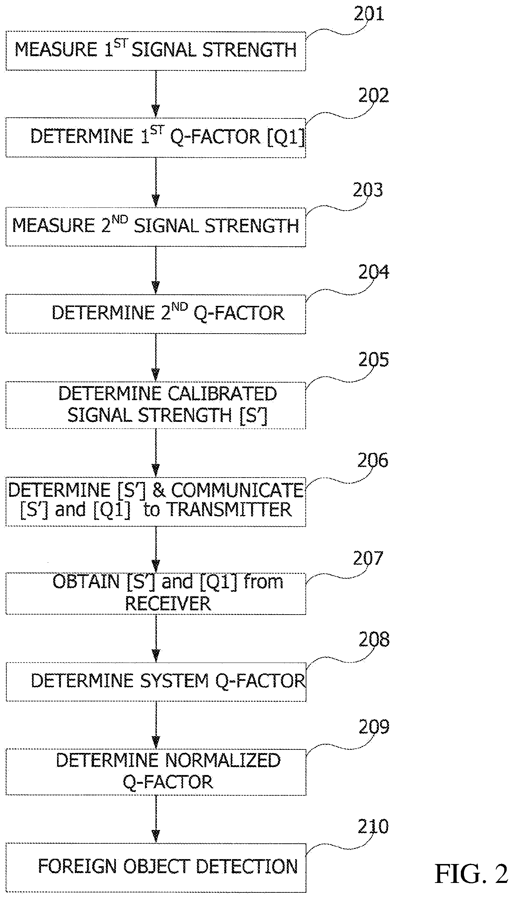

In some exemplary embodiments, the memory retains program code to activate controller 151 to perform acts associated with determining a pulse width modulation (PWM) signal that controls the full or half bridge driver 152. Driver 152 can adjust the output current flowing through Lt 110, i.e. power provided by the Tx 100, by modulating the operational frequency and/or duty cycle of the current flowing through Lt 110. In some exemplary embodiments, the PWM signal generated in the controller 151 tunes the modulation to satisfy the wireless charging needs of a load, such as load 20. In an alternative embodiment, the amplitude of the DC power supply may be controlled. Also, the PWM signal frequency and duty cycle can be set by controller 151, within an operational frequency range, suitable to power demand of load 20. In some exemplary embodiments, the memory may retain program code to activate controller 151 to send a digital ping to the receiver and perform acts associated with any of the steps shown in Fig. 2 and 3.

In some exemplary embodiments, the controller 151 can utilize its memory to retain, connectivity software, monitoring information, configuration and control information and application associated with charging management of present disclosure system.

In some exemplary embodiments, the controller 151 can be configured to communicate with load 20 based on protocols that comply with the following communications standards: power matters alliance (PMA); wireless power consortium (WPC) and AirFuel Alliance. According to these communication methods, but not limited to, the controller 151 can be configured to acquire user's credentials from load 20 in order to authenticate users for granting and regulating charging services. Additionally, or alternatively, the controller 151 can be also configured to acquire from device 20, its power requirements.

The components detailed above can be implemented as one or more sets of interrelated computer instructions, executed for example by controller 151 or by another processor. The components are arranged as one or more executable files, dynamic libraries, static libraries, methods, functions, services, or the like, programmed in any programming language and under any computing environment.

Referring now to Fig. 2 showing a flowchart diagram of a method for foreign object detection, in accordance with some exemplary embodiments of the disclosed subject matter.

In step 201, a first signal strength [S1] is measured. The Rx measures the 1st signal strength [S1] while situated on a reference PTx at a first position and at best coupling. Wherein, first position is defined as no gap (Z vertical axis) between the Rx and Tx, i.e. Z-gap=0; and best coupling, is defined as best possible alignment (X-Y plane) between the Rx and the Tx.

In step 202, a first Q-factor is determined. The Rx determine the first Q-factor [Q1] while situated on a reference PTx at the first position and at best coupling. In some exemplary embodiments, the first Q-factor [Q1] is equal to the reported Q-factor.

In step 203, a second signal strength [S2] is measured. In some exemplary embodiments, the Rx measures the 2nd signal strength [S2] while situated on a reference PTx at a second position and at best coupling. Wherein, second position is defined as higher gap, such as for example 5 millimeters, e.g. Z-gap=5 millimeters.

In step 204, a second Q-factor is determined. In some exemplary embodiments, the Rx determine the second Q-factor [Q2] while situated on a reference PTx at the second position and at best coupling.

In step 205, a calibrated signal strength factor (G) is calculated to be used for determining a calibrated signal strength [S']. In some exemplary embodiments, the following calculations may be conducted by the Rx for determining factor G.

$$\Delta Q = Q_2 - Q_1$$

$$\Delta S = S_2 - S_1$$

$$G = \frac{F\Delta Q}{\Delta S}$$

Wherein F is a fixed factor, typically F=10; the 200 is baseline value defining an absolute perfect alignment; and G is a factor compensating the measured signal strength, by Rx manufacturer, for the relation which the Tx, as measured by Rx with a Tx, of the present disclosure, at any given Z-gap and unknown coupling quality, i.e. typical use of wireless power charging.

In some exemplary embodiments, steps 201 to 205 may be performed as part of factory setup or initial configuration either at the production line or while commissioning the receiver.

In step 206, the calibrated signal strength S' may be determined and communicated together with the reported Q-factor [Q1] to the transmitter. It will be noted that, during typical operation procedure, when the Rx is placed on a Tx, the Rx can conduct a signal strength measurement of a digital ping, initiated by the transmitter, which yields a non-calibrated measured signal strength S3. In some exemplary embodiments, the following equation may be used by the Rx for determining the calibrated signal strength S'.

$$S' = 200 - (S_3 - S_1) * G$$

In step 207, the reported Q-factor [Q1] and the calibrated signal strength [S'] may be obtained from Rx by Tx.

In step 208, a system Q-factor [Qs] may be determined. In some exemplary embodiments, the Tx may determine the Qs based on measured decay time before or after establishing power contract with any given Rx. Typically, the Rx determine the Qs upon placement of an Rx on it.

In step 209, a normalized Q-factor [Qn] may be determined. In some exemplary embodiments, the following calculations may be conducted by the Tx for determining the normalized Q-factor.

$$Q_n = Q_1 + \frac{200 - S'}{F}$$

In step 210, a presence of foreign object may be detected. In some exemplary embodiments, if Qs is greater than Qn, then there is no foreign object present and if Qs is smaller than Qn, then foreign object is present.

The following table is an exemplary test case comprising measurements and calculations of a device having an embedded Rx that is tested at four different Z-gap (0, 1.2, 2.5 and 5 millimeters) with and without a small foreign object.

| Z-gap[millimeters] | 0 | 1.2 | 1.2 | 2.5 | 2.5 | 5 | 5 |
|---|---|---|---|---|---|---|---|
| Foreign object presence | No | No | Yes | No | Yes | No | Yes |
| Inductance[$\mu$H] | 35.17 | 31.85 | 30.365 | 29.53 | 28.76 | 27.35 | 26.45 |
| Resistance [m$\Omega$] | 460 | 495 | 600 | 288 | 426 | 348 | 426 |
| Voltage max. [V] | 3.57 | 4.62 | 5.37 | 6.127 | 5.87 | 10.075 | 11.85 |
| Voltage 37% [V] | 1.32 | 1.71 | 1.99 | 2.27 | 2.17 | 3.725 | 4.38 |
| Decay time [$\mu$Sec.] | 140 | 158 | 93 | 162 | 115 | 173 | 146 |
| Decay frequency [kHz.] | 86.7 | 90.9 | 93.8 | 95.14 | 96 | 98.4 | 98.7 |
| Signal Strength | **163** | 152 | 144 | 134 | 137 | **100** | 95 |
| Calculated system Q-actor | **44** | 49.6 | 29.2 | 50.9 | 36.2 | **54.35** | 45.9 |
| Calibrated signal strength | 200 | 182 | 168 | 153 | 158 | 96 | 88 |
| Normalized Q {Qn} | 40 | 41.8 | 43.2 | 44.7 | 44.2 | 50.4 | 51.2 |
| Q margin based on Q1 | +4 | +9.6 | -11.8 | +10.9 | -3.8 | +14.35 | +5.9 |
| Q margin based on Qn | +4 | +8.8 | -14 | +6.2 | -8 | +4 | -5.3 |

Another technical solution is enhanced method for determining the system Q-factor, which is based on decay-time measurement by the transmitter. In some exemplary embodiments, the transmitter can be configured to perform the measurement process also during operation (charging) without interrupting the receiver operation. The enhanced method of the present disclosure is configured to primarily neutralize the influence of the receiver from the decay time measurement of the transmitter.

In this example, a calibrated signal strength [S'] was calculated based on signal strength measurements at Z-gap=0mm' and at Z-gap=5mm' of the device without foreign objects. The reported S' value was used by the Tx for normalizing the reference Q-factor for yielding the Qn, which will be used for the foreign object detection.

In some exemplary embodiments, the value of G was derived from these measurements depicted in the table would be:

$$G = \frac{F\Delta Q}{\Delta S} = 10 * \frac{10.35}{63} = 1.67$$

In the above example the Rx may reports a Q-factor that is 10% lower than the minimal Q-factor measured on the surface (i.e. 40).

As can be seen from the measurements depicted in the table above, the calibration process removed the ambiguity in foreign object detection for variable Z-gap, and provides deterministic results with good margins even for small foreign objects. In contrast, with Q1 margin, the foreign object wouldn't be detected for the case of a device situated 5[mm] above surface and the foreign object is on the surface.

The above exemplary embodiment uses an approximated linear relation of signal strength and Q-factor. In another exemplary embodiment the relation between signal strength and Q-factor is determined by performing multi point calibration of the Rx (i.e. measuring the Q-factor across multiple Z-gaps and calibrating signal strength accordingly. Additionally, or alternatively, other relation between signal strength and Q-factor may be used on both Rx reporting or Tx calculation of Q-factor.

In yet another exemplary embodiment, the information of the decay oscillation frequency may be combined to further improve the foreign object detection. Presence of foreign object can increase the decay oscillation frequency, but in itself is not distinguishable from increase of Z-gap. However, given Z-gap or Q-factor is measured, for a given Z-gap or Q-factor, a reference decay frequency can be defined so that measured frequency above that frequency can be used to detect foreign object presence.

Given the example above and an exemplary implementation, using the measured Q-factor for minimal and maximal Z-gap and based on it defines a linear approximation for the decay frequency in relation to measured Q-factor allow for some additional frequency margin of 2KHz.

$$Gain = \frac{Fmax - Fmin}{Qmax - Qmin} = \frac{98.4 - 87.6}{54.35 - 44} = 1.0435$$

$$F_{threshold} = Fmin + (Qdecay - Qmin) * Gain + Fmarign = 1.0435 * Qdecay + 43.69$$

Using the above threshold and comparing it with the actual measured decay frequency would provide correct detection of foreign object for all above scenarios.

Referring now to Fig. 3 showing a flowchart diagram of another method for foreign object detection, in accordance with some exemplary embodiments of the disclosed subject matter.

In some exemplary embodiments, the transmitter's decay-time measurement for determining the system Q-factor, may be configured to perform the measurement process also during charging without interrupting the receiver operation. This enhanced method, of the present disclosure, is aimed to primarily neutralize the influence of the receiver during the decay time measurement of the transmitter.

In step 301, a receiver (Rx) may report a Q-factor and a Tmin to a transmitter (Tx). In some exemplary embodiments, the Tmin is calculated based on time constant [$\tau$], which is defined by the product of Cr 230 and $R_L$ 250, i.e. ($\tau$=Cr*$R_L$) of Fig. 1. Due to the natural behavior of capacitor Cr240 a voltage decay of charged Cr240, providing that rectifier 240 seize to charge it, would be exponential with time constant equal $\tau$. Thus, Tmin (time-minimum) may be

$$Tmin = R_L * C_r * \ln\left(\frac{Vrect}{Vmin}\right)$$

calculated using the following equation , where Vrec is voltage output of rectifier 240 and Vmin is the minimal voltage required by the Rx before the Rx operation is interrupting, and $R_L$ is the typical load resistance on the Rx.

Additionally, or alternatively instead of calculating the Tmin, the Rx may report the values of Cr230; R$_L$250; τ; *Vrect; Vmin;* and any combination thereof to the Tx so that the Tx can calculate the Tmin. In addition, the Rx shall also report the so-called "reported" Q-factor, which is the standard Q-factor measured during production of the Rx, as previously described.

In step 302, the transmitter may initiate a decay-time measurement. In some exemplary embodiments, the Tx may set a timeslot (Tslot) that is smaller or equal than time-minimum (Tmin), wherein the Tslot is practically a time duration in which the Tx can pause charging the Rx without interrupting its operation. It should be noted that, the Tx shall also calculate, in this step, the Tmin in an embodiment where the Rx reports to the Tx its Tmin calculating parameters, i.e. resonance circuits values and Vmin, instead of calculating the Tmin.

In step 303, the transmitter may pause charging the receiver for a timeslot equal to Tslot. In some exemplary embodiments, the Tx stops its power driver operation from driving coil Ls 110 for a time-period Tslot that is shorter than Tmin, consequently allowing Cr230 to start decaying. By doing so the power for charging Rx gradually reduced, without interrupting the Rx operation.

In step 304, the transmitter may repetitively measure the decay-time. In some exemplary embodiments, the Tx starts repetitive measurements shortly (e.g. a preset time or preset number of cycles, for example two cycles) after the Tslot starts, wherein a cycle may be at least one resonance frequency cycle. In some exemplary embodiments, the decay-time may be determined based on repetitive measurements of either voltage or current of Lt110 and or resonance capacitor Ct130, of Fig. 1, during the remaining time of Tslot. Additionally, or alternatively, the Rx may also determine the decay oscillation frequency based on same measurements.

For example, the decay-time can be determined based on the ratio in amplitude between peaks and the time interval between them in the measured voltage/current. Additionally, or alternatively, the decay-time is determined by:

$$\tau = \Delta t / \ln\left(\frac{A1}{A2}\right)$$

where Δ*t* is the time interval between peaks; A1 & A2 are the amplitude of two consecutive peaks. Additionally, or alternatively, the decay oscillation frequency can be determined based on the time interval between peaks in the measured voltage/current $f = 1/\Delta t$

In steps 305, and 306 the transmitter may resume charging the Rx after the end of Tslot and calculate the system Q-factor based on results of the repetitive decay-time measurements of the last Tslot.

In step 307, a foreign object presence may be detected. In some exemplary embodiments, the transmitter determines foreign object presence if the Q-factor reported by the Rx is greater than the system Q-factor, calculated by the Tx. Else, if the Q-factor reported by the Rx is smaller than the system Q-factor, then there is no foreign object detection.

It should be noted that, a typical inductive power Rx includes a resonance circuit (Ls 210 and Cs 230) connected to a full or half wave rectifier 240 that has parallel capacitor Cr260 and a typical resistive load R$_L$. In some exemplary embodiments, the transmitter cease driving the power signal for a short-defined time period Tslot. The time period Tslot is determined such that the voltage decay of the rectifier capacitor Cr260 will not allow the voltage Vrect to drop below a system defined Vmin. By ceasing the power signal for a timeslot that is shorter than Tmin the design of the present disclosure guarantee that the Rx power transfer will still continue without interruption.

One objective of the present disclosed subject matter is providing the ability to correctly measure the decay pattern on current or voltage on the Tx in order to extract decay time and derived Q factor. The intent is to be able to measure the Q factor in presence of the Tx any existing foreign object and Rx "friendly metal" but without disconnecting the power Rx reception circuit.

In steps 302 to 304 the signal decay on this short interval stop, the voltage on the Rx is above the rectifier opening voltage and also above the Vrect, as such the Rx immediately after the power driver stop, would still have current flowing through its rectifier. The decay of the signal on the Tx would be much more rapid as the Rx load is reflected to the Tx. This process will continue until the induced voltage and Rx circuit resonance circuit voltage go below the rectifier capacitor voltage. In most exemplary embodiments, it takes 2 to 3 cycles oscillations (at typically 100kHz, i.e. 20-30usec) before the decay-time measurements starts.

It should be noted that, once the rectifier shutdown the effect of Rx load and circuit neutralized as hardly no current is flowing in the Rx resonant circuit. The load is then completely supplied by the rectification capacitor.

It should also be noted that, the decay time of the Tx is longer when there is no foreign object present and the friendly metal is minimal. In such case the decay time constant may be given by 2*Lt/Rp were Lt110 is the Tx circuit inductance, and Rp its parasitic resistance. However, If the decay time of the Tx is higher than decay time of rectified voltage (Cr*RL) then the voltage induced by the Tx will decay slower than the decay of rectified voltage, and at certain point that rectification stage will start conducting again. In this scenario the Rx may adopt the reported Tmin to be dependent on the estimated time until rectification stage conduction resumes. In one embodiment the reported time Tmin is selected as the lower of the time until rectification conduction and $R_L * C_r * \ln\left(\frac{Vrect}{Vmin}\right)$

The present disclosed subject matter may be a system, a method, and/or a computer program product. The computer program product includes a computer readable storage medium (or media) having computer readable program instructions thereon for causing a processor to carry out aspects of the present disclosed subject matter.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosed subject matter may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a standalone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosed subject matter.

Aspects of the present disclosed subject matter are described herein with reference to flowchart illustrations and/or block diagrams of methods, apparatus (systems), and computer program products according to embodiments of the disclosed subject matter. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present disclosed subject matter. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular embodiments only and is not intended to be limiting of the disclosed subject matter. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials and acts of all means or step plus function elements in the claims below are intended to include any structure, material, or act for performing the function in combination with other claimed elements as specifically claimed. The description of the present disclosed subject matter has been presented for purposes of illustration and description, but is not intended to be exhaustive or limited to the disclosed subject matter in the form disclosed. The embodiment was chosen and described in order to best explain the principles of the disclosed subject matter and the practical application, and to enable others of ordinary skill in the art to understand the disclosed subject matter for various embodiments with various modifications as are suited to the particular use contemplated.

**Claims**

1.   A method of determining a calibrated signal strength factor used for foreign object detection, the method performed by a receiver (200) positioned on top of a transmitter (100), the method comprising:

measuring (201) a first signal strength, S1, resulting from a digital ping initiated by the transmitter (100) at a first position, wherein the first position is a best coupling position;
determining (202) a first Q-factor, Q1, for the first position, wherein the first Q-factor, Q1, is a reported Q-factor;
measuring (203) a second signal strength, S2, resulting from another digital ping initiated by the transmitter (100) at a second position;
determining (204) a second Q-factor, Q2, for the second position; and
determining the calibrated signal strength factor, G, based on the first signal strength, S1, the second signal strength, S2, the first Q-factor, Q1, and the second Q-factor, Q2.

2.   A receiver (200) comprising means for carrying out the method of claim 1.

3.   A computer program comprising instructions which, when the program is executed by a computer, cause the computer to carry out the method of claim 1.

4.   A computer-readable storage medium, comprising instructions which, when executed by a computer, cause the computer to carry out the method of claim 1.

**Patentansprüche**

1.   Verfahren zum Bestimmen eines kalibrierten Signalstärkefaktors, der zur Fremdkörperdetektion verwendet wird, wobei das Verfahren von einem Empfänger (200) durchgeführt wird, der über einem Sender (100) angeordnet ist, und das Verfahren umfasst:

Messen (201) einer ersten Signalstärke, S1, die sich aus einem digitalen Ping ergibt, der von dem Sender (100) an einer ersten Position initiiert wird, wobei die erste Position eine beste Kopplungsposition ist;
Bestimmen (202) eines ersten Q-Faktors, Q1, für die erste Position, wobei der erste Q-Faktor, Q1, ein berichteter Q-Faktor ist;
Messen (203) einer zweiten Signalstärke, S2, die aus einem weiteren digitalen Ping resultiert, der von dem Sender (100) an einer zweiten Position initiiert wird;

Bestimmen (204) eines zweiten Q-Faktors, Q2, für die zweite Position; und

Bestimmen des kalibrierten Signalstärkefaktors, G, basierend auf der ersten Signalstärke, S1, der zweiten Signalstärke, S2, dem ersten Q-Faktor, Q1, und dem zweiten Q-Faktor, Q2.

2. Ein Empfänger (200), der Mittel zur Durchführung des Verfahrens nach Anspruch 1 umfasst.

3. Ein Computerprogramm, das Instruktionen umfasst, die, wenn das Programm von einem Computer ausgeführt wird, den Computer veranlassen, das Verfahren nach Anspruch 1 auszuführen.

4. Ein computerlesbares Speichermedium, das Instruktionen umfasst, die, wenn sie von einem Computer ausgeführt werden, den Computer veranlassen, das Verfahren nach Anspruch 1 auszuführen.

**Revendications**

1. Procédé de détermination d'un facteur d'intensité de signal étalonné utilisé pour la détection de corps étrangers, le procédé étant exécuté par un récepteur (200) positionné au-dessus d'un émetteur (100), le procédé comprenant :

la mesure (201) d'une première intensité de signal, S1, résultant d'un ping numérique initié par l'émetteur (100) à une première position, dans lequel la première position est une meilleure position de couplage ;

la détermination (202) d'un premier facteur Q, Q1, pour la première position, dans lequel le premier facteur Q, Q1, est un facteur Q rapporté ;

la mesure (203) d'une seconde intensité de signal, S2, résultant d'un autre ping numérique initié par l'émetteur (100) à une seconde position ;

la détermination (204) d'un second facteur Q, Q2, pour la seconde position ; et

la détermination du facteur d'intensité de signal étalonné, G, sur la base de la première intensité de signal, S1, de la seconde intensité de signal, S2, du premier facteur Q, Q1, et du second facteur Q, Q2.

2. Récepteur (200) comprenant des moyens pour mettre en oeuvre le procédé selon la revendication 1.

3. Programme d'ordinateur comprenant des instructions qui, lorsque le programme est exécuté par un ordinateur, amènent l'ordinateur à exécuter le procédé selon la revendication 1.

4. Support de stockage lisible par ordinateur, comprenant des instructions qui, lorsqu'elles sont exécutées par un ordinateur, amènent l'ordinateur à mettre en oeuvre le procédé selon la revendication 1.

FIG. 1

EP 3 815 265 B1

201

MEASURE 1ST SIGNAL STRENGTH

202

DETERMINE 1ST Q-FACTOR [Q1]

203

MEASURE 2ND SIGNAL STRENGTH

204

DETERMINE 2ND Q-FACTOR

205

DETERMINE CALIBRATED
SIGNAL STRENGTH [S']

206

DETERMINE [S'] & COMMUNICATE
[S'] and [Q1] to TRANSMITTER

207

OBTAIN [S'] and [Q1] from
RECEIVER

208

DETERMINE SYSTEM Q-FACTOR

209

DETERMINE NORMALIZED
Q-FACTOR

210

FOREIGN OBJECT DETECTION

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9825486 B2

- WO 2018038531 A1

**Non-patent literature cited in the description**

- **VLADIMIR MURATOV.** *Methods for Foreign Object Detection is Inductive Wireless Charging*